# EUROPÄISCHE PATENTSCHRIFT

(11) **EP 0 701 878 B1**
(45) Veröffentlichungstag und Bekanntmachung des Hinweises auf die Patenterteilung: **11.08.1999**
(21) Anmeldenummer: 95114363.5
(22) Anmeldetag: 13.09.1995
(51) Int. Cl.: B23K 37/053

(54) **Vorrichtung und Verfahren zum Herstellen von Rohren**
Device and method for manufacturing of tubes
Dispositif et procédé de fabrication de tuyaux

(30) Priorität: 14.09.1994 DE 4432674
(43) Veröffentlichungstag der Anmeldung: 20.03.1996
(73) Patentinhaber: Weil Engineering GmbH, 79379 Müllheim (DE)
(72) Erfinder: Lacher, Walter, D-79418 Schliengen (DE); Schappacher, Werner, D-79419 Badenweiler (DE)
(74) Vertreter: Schmitt, Hans, Dipl.-Ing.

(56) Entgegenhaltungen:
- DE-A- 2 002 015
- DE-C- 3 113 769
- FR-A- 2 380 102
- US-A- 3 934 324
- US-A- 4 747 289
- PATENT ABSTRACTS OF JAPAN vol. 008 no. 227 (M-332) ,18.Oktober 1984 & JP-A-59 107776 (NIHON AAMU KOGYO KK;OTHERS: 01) 22.Juni 1984,

## Beschreibung

Die Erfindung bezieht sich auf eine Vorrichtung und ein Verfahren zum Herstellen von Rohren aus dünnwandigem Material, insbesondere aus Blech, mit einer Stumpfnahtschweißmaschine oder dergleichen zum Längsnahtschweißen sowie einer Spannvorrichtung zum Halten eines gegebenenfalls rohrförmig vorgeformten Zuschnittes in Schweißstellung, wobei die Spannvorrichtung Spannbacken jeweils für die Längsränder des Zuschnittes aufweist und wobei eine Halterung zur Auflage eines rohrförmig vorgeformten Zuschnittes vorgesehen ist.

Zum Herstellen von längsgeschweißten Rohren sind bereits Spannbänke bekannt. Dabei wird eine der zu verschweißenden Rohrlängskanten mit manueller Unterstützung gegen Anschläge gedrückt und mittels Spannbacken in dieser Position festgehalten. Die zweite Längskante wird dann ebenfalls mittels manueller Unterstützung gegen die bereits eingespannte Kante gedrückt und in dieser Position ebenfalls eingespannt.
Diese Spanntechnik ist im Bereich von größeren Rohrdurchmessern und bei häufigem Wechsel der Rohrdurchmesser die übliche und auch gebräuchlichste Art der Spanntechnik.
Bei solchen Spannbänken ist das Produktionsergebnis wesentlich vom Geschick des Bedieners abhängig. Problematisch ist insbesondere auch bei der Handhabung und beim Einspannen, daß eine äußerst schonende Behandlung insbesondere von dünnwandigen Rohren beziehungsweise der entsprechend dünnen Bleche erforderlich ist, um Deformationen und damit einen übermäßigen Ausschuß zu vermeiden.

Es sind auch bereits Spannwerkzeuge bekannt, die vollautomatisch arbeiten und bei denen ein gerundetes Rohr manuell oder automatisch in das Spannwerkzeug geschoben wird, das auf den Durchmesser des Rohres abgestimmt ist. Das Spannwerkzeug übernimmt dabei auch mittels Spannzylinder und Klemmbacken die Positionierung des gerundeten Rohres, so daß ein automatischer Schweißvorgang eingeleitet werden kann.
Diese Art der Spanntechnik wird vorwiegend bei Anlagen eingesetzt, die nur Rohre mit einem gleichbleibenden Durchmesser zu verschweißen haben, insbesondere für die Hausgeräteindustrie und dabei zum Beispiel für Trockner, Waschmaschinen, Trommeln und dergleichen. Bei einem Wechsel des Rohrdurchmessers muß entweder das gesamte Spannwerkzeug ausgetauscht werden oder das Werkzeug muß auf den neu zu schweißenden Rohrdurchmesser in aufwendiger Weise umgebaut werden.

Weiterhin kennt man sogenannte Durchlauf-Spannwerkzeuge, die vorwiegend bei der Massen-Rohrherstellung zum Einsatz kommen. Dabei wird das Blech vom flachen Zustand über eine Vielzahl von Profilierrollen kontinuierlich zum runden Körper geformt und am Ende des Durchlauf-Werkzeuges wird ein entsprechender Schweißvorgang durchgeführt.
Diese Technik ist jedoch nur wirtschaftlich, wenn sehr große Stückzahlen von einem Rohrdurchmesser gefertigt werden. Beim Ändern des Rohrdurchmessers müssen unabdingbar zumindest die Rollen des Spannwerkzeuges ausgetauscht werden, was ebenfalls aufwendig ist.

Aus der DE-C-31 13 769 ist eine Vorrichtung bekannt, bei der ein Rohrschuß, der durch einen rohrförmig vorgeformten, an den Längsrändern noch nicht verbundenen Rohrabschnitt gebildet ist, zugeführt und auf einem Rollenlängsgang, oder zum Drehen des Rohrschusses, auf einer Rollenbockanordnung, gelagert wird.

Zum Richten des Rohrschusses bei sich überlappenden oder zu weit voneinander beabstandeten Längsrandbereichen sind Spreizeinrichtungen und Spannketten vorgesehen.
Mit Hilfe dieser Vorrichtung ist zwar bei ausreichender Eigenstabilität des Rohrschusses ein Richten und Positionieren als Vorbereitung zum Schweißen des Rohrschusses möglich, jedoch kann damit nicht aus einem flachen oder im beliebigen Maß zu einer Rinne oder einem Rohr vorgebogenen, dünnwandigem Zuschnitt ein Rohr hergestellt werden.

Aufgabe der vorliegenden Erfindung ist es, eine Vorrichtung der eingangs erwähnten Art sowie ein Verfahren zu schaffen, wobei unter Vermeidung der vorbeschriebenen Nachteile und bei geringem Aufwand Rohre unterschiedlichen Durchmessers herstellbar sind und wobei auch sehr große Rohrdurchmesser-Unterschiede verarbeitbar sein sollen.
Insbesondere soll vermieden werden, daß für unterschiedliche Rohrdurchmesser ein Auswechseln von Teilen der Vorrichtung erforderlich ist. Weiterhin soll die Bedienbarkeit vereinfacht sein. Schließlich soll mit Hilfe der Vorrichtung ein Herstellen von Rohren unterschiedlichen Durchmessers bei gleichbleibender Qualität insbesondere auch bezüglich der Längsnaht und der Form der Rohre erzielbar sein.

Zur Lösung dieser Aufgabe wird erfindungsgemäß insbesondere vorgeschlagen, daß in ihrem Abstand zueinander verstellbare Halter vorgesehen sind, zwischen denen zur Auflage für den Zuschnitt wenigstens ein den Zuschnitt untergreifendes und haltendes, flexibles Zugelement aufgespannt ist, und daß die wirksame Länge des am Zuschnitt angreifenden Zugelementes verstellbar ist.

Mittels dieser Vorrichtung können Rohre unterschiedlichen Durchmessers ohne Umrüstung der Vorrichtung und auch ohne Austausch von Einzelteilen oder gar des gesamten Spannwerkzeuges auf einfache Weise hergestellt werden. Dies ist durch die variable Halterung möglich, wobei die Rohre je nach Rohrdurchmesser mehr oder weniger von dem Zugelement umschlungen werden, dabei aber sicher gehalten und mit ihren freien Rändern zusammengeführt werden können. Insbesondere in Verbindung mit der abstandvariablen Halterung für den oder die Zugelemente besteht durch die Verstellbarkeit der wirksamen Länge des am Zuschnitt angreifenden Zugelementes die Möglichkeit, den Durchmesser der zu bearbeitenden Rohre in einem großen Bereich zu variieren. Außerdem kann das Zusammenführen der Rohr-Längsränder durch Verkürzen der Zugelemente erfolgen. Somit ist auch bei kleinen Rohrdurchmessern ein Übergreifen der Längsränder durch die Halter in vorteilhafter Weise nicht erforderlich. Die erfindungsgemäße Vorrichtung bietet durch die Verwendung von flexiblen Zugelementen den Vorteil der gleichmäßigen Spannkraftaufbringung und damit eine schonende Behandlung des dünnen und entsprechend beulempfindlichen Bleches. Gerade bei den verwendeten, dünnen Blechen ist insbesondere in Verbindung mit großen Rohrdurchmessern eine hohe Labilität des Zuschnittes oder der vorgeformten Rohrabschnitte vorhanden, die das Handling problematisch macht. Ein wesentlicher Vorteil bei der vorliegenden Erfindung ist auch darin zu sehen, daß der gegebenenfalls labile Blechzuschnitt unmittelbar beim Auflegen auf die Zugelemente unterseitig am Umfang flächig abgestützt und gehalten ist.
Zweckmäßigerweise sind an den zueinander verstellbaren Haltern Umlenkungen für das Zugelement vorgesehen, über die dieses beim Verstellen der wirksamen Länge geführt wird.

Insbesondere in Verbindung mit der variablen Halterung für den oder die Zugelemente besteht dadurch die Möglichkeit, den Durchmesser der zu bearbeitenden Rohre in einem noch größeren Bereich zu variieren. Außerdem kann das Zusammenführen der Rohr-Längsränder durch Verkürzen der Zugelemente erfolgen. Somit ist auch bei kleinen Rohrdurchmessern ein Übergreifen der Längsränder durch die Kalter in vorteilhafter Weise nicht erforderlich.

Zweckmäßigerweise sind vorzugsweise mehrere, in Längsrichtung des Rohres nebeneinander angeordnete Zugelemente vorgesehen, die insbesondere als Spannbänder ausgebildet sind.
Damit lassen sich auch längere Rohre gut halten und die Verwendung von Spannbändern ergibt eine auch für dünnwandige Rohre genügend flächige Auflage.
Gegebenenfalls sind die Zugelemente jeweils mit einem Ende auf einer mit einem Wickelantrieb verbundenen Haspel aufgewickelt und das jeweils andere Ende der Zugelemente ist fest am Halter angeschlossen. Dies vereinfacht die Konstruktion und ermöglicht trotzdem die vorgesehene Arbeitsweise, bei der das auf dem Zugelement aufliegende Rohr höhenpositionierbar ist und auch mit seinen Längsrändern zusammengeführt werden kann.
Vorzugsweise ist jedoch vorgesehen, daß beide Enden der Zugelemente jeweils auf mit Wickelantrieben verbundenen Haspeln aufgewickelt sind.
Beim Höhenpositionieren kann bei gleichzeitigem Aufwickeln beider Enden der Zugelemente eine Drehung des aufliegenden Rohres vermieden werden.
Nach einer Weiterbildung der Erfindung ist vorgesehen, daß die Vorrichtung einen relativ zur Stumpfnahtschweißmaschine in Längsrichtung des Rohrs verfahrbaren Werkzeugwagen mit der Halterung für den Zuschnitt beziehungsweise das Rohr aufweist. Der Werkzeugwagen kann dadurch aus einer in der Schweißmaschine liegenden Arbeitsposition in eine Beladeposition herausgezogen werden und ist dann in dieser zum Einlegen eines vorzugsweise zu einem Rohr vorgeformten Zuschnittes besonders gut zugänglich.

Zweckmäßigerweise weist die Spannvorrichtung eine Auflage für die Längsränder des Rohres sowie zur oberseitigen Beaufschlagung der Längsränder voneinander getrennt betätigbare Spannbacken auf. Dadurch besteht die Möglichkeit, zunächst den einen Längsrand des Zuschnittes einzuspannen und anschließend den anderen Längsrand an den eingespannten heranzuführen und diesen dann ebenfalls einzuspannen. Das Rohr ist dann in Schweißstellung gehalten.

Die Erfindung bezieht sich auch auf ein Verfahren zur Herstellung von Stumpfnaht-längsgeschweißten Rohren aus flächigem Material, insbesondere aus Blechzuschnitten, wobei die Zuschnitte einer Einspannvorrichtung zugeführt, dort gehalten und dann geschweißt werden.
Dieses Verfahren ist insbesondere dadurch gekennzeichnet, daß der Zuschnitt mit seinem Außenmantel auf eine seitlich von diesem gehaltene, flexible Auflage aufgelegt wird, daß die Auflage dann abgesenkt und der Zuschnitt dabei rinnen- oder rohrförmig vorgebogen und von der Auflage zunehmend umschlungen wird und dabei die Längsränder des Zuschnittes zusammengeführt werden.
Wie bereits in Verbindung mit der erfindungsgemäßen Vorrichtung beschrieben, besteht dadurch die Möglichkeit, Rohre unterschiedlichen Durchmessers problemlos herzustellen, wobei insbesondere ein Auswechseln von Teilen und ein aufwendiges Umrüsten in Anpassung an die unterschiedlichen Rohrdurchmesser vermieden wird.
Zweckmäßigerweise ist vorgesehen, daß nach dem Auflegen des gegebenenfalls rohrförmig vorgebogenen Zuschnittes auf die flexible Auflage die Längsränder des Zuschnittes stirnseitig gegen einen in den Rohr-Längsspalt eingreifenden Anschlag unter weiterem Zubiegen des Zuschnittes bewegt und dann eingespannt werden.
Durch den Anschlag werden die Längsränder des Zuschnittes exakt in Längsrichtung beziehungsweise in Schweißrichtung ausgerichtet und somit relativ zu der Schweißeinrichtung exakt positioniert.

Eine vorteilhafte Ausgestaltung der Erfindung sieht vor, daß nach dem Auflegen des Zuschnittes auf die flexible Auflage einer der Längsränder des Zuschnittes stirnseitig gegen einen in den Rohr-Längsspalt eingreifenden Anschlag bewegt und dann eingespannt wird, daß anschließend der andere Längsrand des Zuschnittes an die andere Seite des Anschlages durch einseitiges Spannen der flexiblen Auflage geschoben, der Anschlag entfernt und der bewegliche Längsrand durch weiteres Spannen der flexiblen Auflage an den eingespannten Längsrand angedrückt und dann in dieser Lage eingespannt wird und daß dann die Rohrlängsnaht geschweißt wird. Durch diese Verfahrensschritte ist ein sehr exaktes Positionieren der Rohr-Längsränder möglich und es lassen sich so Fügespalte sowie Vertikal- und Horizontal-Positionsgenauigkeiten erreichen, die auch hohen Anforderungen gerecht werden, insbesondere in Verbindung mit Laserschweißnähten.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.

Es zeigt:
- Fig. 1: eine Stirnseitenansicht einer erfindungsgemäßen Vorrichtung mit einer Schweißmaschine und einem Werkzeugwagen,
- Fig. 2: eine Teilseitenansicht der in Figur 1 gezeigten Vorrichtung mit herausgefahrenem Werkzeugwagen
- Fig. 3 bis 6: die Vorrichtung gemäß Figur 1 in unterschiedlichen Ansichten und Darstellung eines Arbeitsablaufes beim Zuführen eines Rohres,
- Fig. 7: eine Schnittdarstellung gemäß der Schnittlinie B-B in Figur 6,
- Fig. 8: eine Schnittdarstellung entsprechend der Schnittlinie A-A in Figur 6,
- Fig. 9: eine schematische Darstellung von festen und beweglichen Anschlägen für einen Ausgleich eines Axialversatzes eines Rohres,
- Fig. 10 und 11: Rohrhalterungen in unterschiedlichen Haltepositionen,
- Fig. 12 bis 16: Darstellungen des schrittweise ablaufenden Einspannvorganges eines Rohres,
- Fig. 17 bis 19: Darstellungen einer zu der erfindungsgemäßen Vorrichtung gehörenden Halterung mit im Durchmesser unterschiedlichen Rohren.

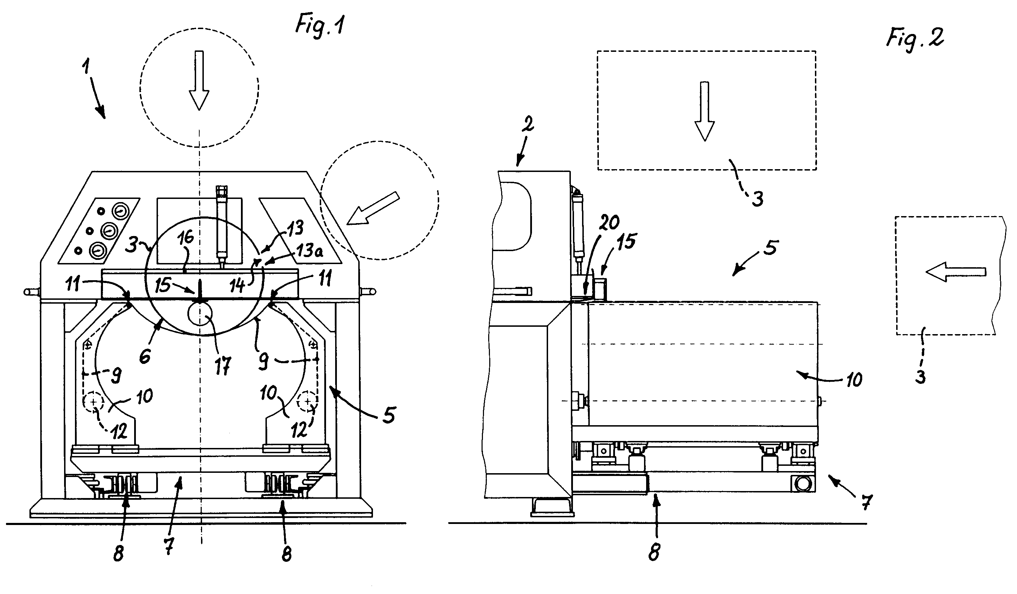

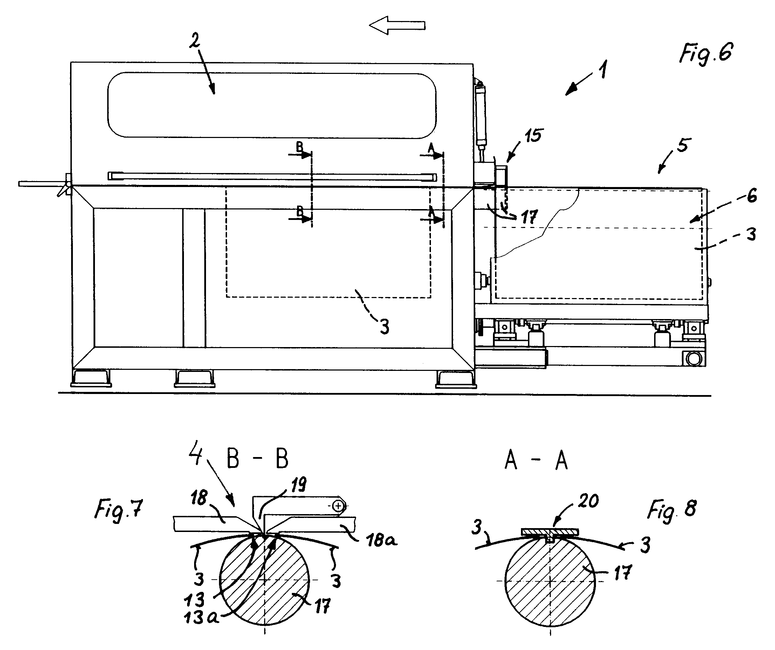

Eine in Figur 1 in Stirnseitenansicht und in Figur 6 in Seitenansicht dargestellte Vorrichtung 1 dient zum Herstellen von Rohren aus dünnwandigem Material, insbesondere dünnwandigem Blech. Sie weist eine Stumpfnahtschweißmaschine 2 zum Längsschweißen der Rohre 3 mit einer Spannvorrichtung 4 zum Halten der Rohre, sowie eine Halterung 5 zur unterstützenden Auflage des Blech-Zuschnittes 6 bzw. des vorgeformten Rohres auf. Die Halterung 5 befindet sich an einem in Längsrichtung relativ zu der Stumpfnahtschweißmaschine 2 verfahrbaren Werkzeugwagen 7. Dieser läßt sich etwa um die Länge des herzustellenden Rohres aus der Stumpfnahtschweißmaschine herausfahren und ist auf Längsschiebeführungen 8 gelagert.

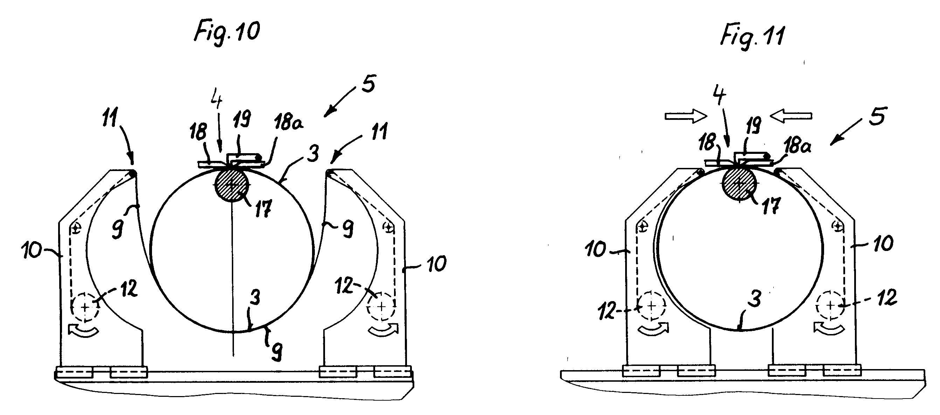

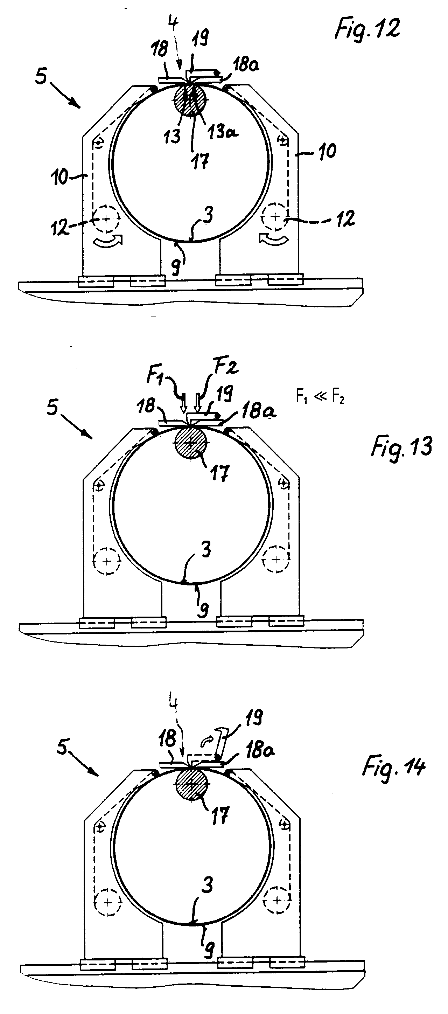

Die Halterung 5 dient zur Auflage eines gegebenenfalls rohrförmig vorgebogenen oder flachen Blech-Zuschnittes und weist diesen untergreifende und haltende sowie den nach dem Auflegen rohrartig etwas vorgeformten Zuschnitt am Außenmantel teilweise umschlingende Zugelemente 9 auf. Vorzugsweise sind in Längsrichtung des zu haltenden Rohres nebeneinander wenigstens zwei zueinander beabstandete Zugelemente 9 vorgesehen, die insbesondere als Spannbänder ausgebildet sind.
Die Halterung 5 weist weiterhin in ihrem Abstand zueinander verstellbare Seitenwangen 10 als Halter für die Zugelemente 9 auf. An deren oberen Enden befinden sich Umlenkungen 11, über die die Zugelemente 9 geführt sind. Die Enden der Zugelemente 9 sind auf Haspeln 12 aufgewickelt, die mit Wickelantrieben verbunden sind. Diese Wickelantriebe sind mit einer Steuerung verbunden, über die eine exakte Positionierung sowohl der Länge der zwischen den Umlenkungen 11 befindlichen Zugelementeabschnitte als auch ein seitliches Positionieren der Zugelemente 9 möglich ist.
Zum Verändern der Länge der Zugelemente 9 zwischen den Umlenkungen 11 können die auf beiden Seiten befindlichen Haspeln 12 jeweils in gleichem Maße angetrieben werden, während für ein Positionieren unterschiedliche Auf- oder Abwickelbewegungen möglich sind. Die Haspeln 12 und auch deren Winkelantriebe befinden sich ebenfalls in den Seitenwangen 10 des Werkzeugwagens 7.
Die Seitenwangen 10 sind auch in ihrem Abstand zueinander veränderbar, was gut bei einem Vergleich der Figuren 10 und 11 erkennbar ist.
Anstatt von Wickelantrieben zum Verändern der Länge der Zugelemente 9 können auch andere Vorrichtungen, beispielsweise Linearantriebe oder dergleichen vorgesehen sein.
Die Halterung 5 dient in der in Figur 2 gezeigten Bestückungslage außerhalb der Schweißeinrichtung 2 zur Aufnahme von flachen oder rohrförmig vorgeformten Blechzuschnitten und zum lagegerechten Zuführen dieser gehaltenen Zuschnitte zu der bei der Schweißeinrichtung befindlichen Spannvorrichtung 4. Außerdem dient sie auch zum exakten Positionieren der Längsränder 13, 13a innderhalb der Spannvorrichtung 4. Dabei besteht die Möglichkeit, ohne Umbau der Vorrichtung unterschiedliche Rohrgrößen verarbeiten zu können.

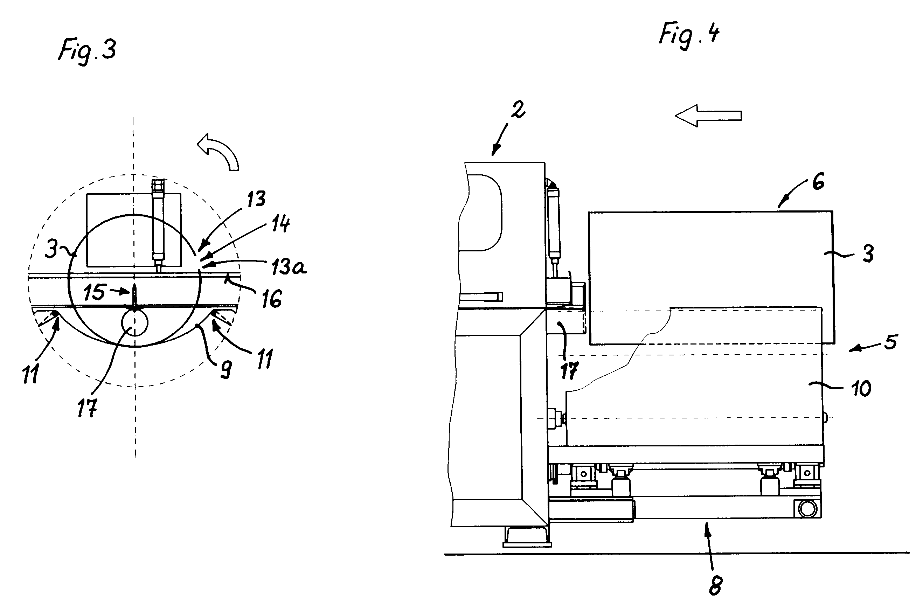

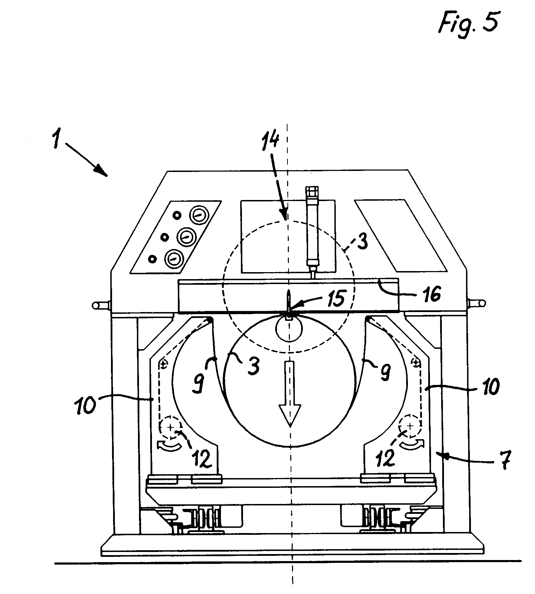

Im einzelnen läuft der Aufnahme- und Spannvorgang folgendermaßen ab:
Bei herausgefahrenem Werkzeugwagen 7 (Figur 2) wird das strichliniert angedeutete, vorgeformte Rohr in die Halterung 5 eingelegt. Die Seitenwangen 10 sind dabei, wie in Figur 1 erkennbar, auseinandergefahren und die Zugelemente 9 sind bis zu einer für den jeweiligen Rohrdurchmesser festgelegten Position aufgewickelt, so daß sich eine etwas erhöhte Auflage für das Rohr 3 ergibt. Durch die strichliniert angedeuteten und mit Richtungspfeilen versehenen Rohre 3 ist angedeutet, daß das längs zusammenzuschweißende Rohr 3 entweder von oben auf die Zugelemente 9 aufgelegt oder aber auch stirnseitig eingeschoben werden kann. Um die Lage des Rohres 3 im Werkzeugwagen 7 auch bei unterschiedlichen Rohrlängen definieren zu können, wird der Hub des Werkzeugwagens 7 über einen verstellbaren Endanschlag auf die jeweilige Rohrlänge eingestellt. Schiebt der Bediener das Rohr 3 nun bis an diesen Anschlag 16 an der Stirnseite der Schweißmaschine 2, so ergibt sich automatisch die richtige Lage des Rohres.
Falls sich das Rohr mit seinem Längsspalt 14 nicht in Obenlage befindet, wird das Rohr soweit gedreht, bis der Spalt nach oben zeigt. Anschließend wird das Rohr in Längsrichtung an einen Anschlag 16 geschoben. In den Figuren 3 und 4 ist diese Phase des Arbeitsablaufes dargestellt.
Durch Betätigen der mit den Haspeln 12 verbundenen Wickelantriebe werden anschließend die Zugelemente 9 verlängert, wobei dies beidseitig synchron erfolgt. Das gehaltene Rohr 3 wird dabei abgesenkt (Figur 5) und befindet sich dann etwa in Einschiebhöhe. Sehr große, dünnwandige und damit labile Rohre können, um ein Zusammenfallen zu verhindern, stirnseitig in dieser Phase manuell gehalten werden.
Beim Absenken des Rohres schiebt sich eine Spaltzentrierung 15 in den Rohr-Spalt 14. Hat das Rohr seine unterste Lage erreicht, liegt es auf einem nach vorne etwas aus der Schweißmaschine herausragenden Auflagearm 17 auf (vgl. Figur 4-8).

Wie gut in Figur 5 erkennbar, vergrößert sich die Umschlingung des Rohres durch die Zugelemente 9 beim Absenken bis auf nahezu 180 Grad, wobei ein vorher vorhandener, zu großer Spalt 14 praktisch automatisch bis auf die durch die Spaltzentrierung 15 vorgegebene Spaltbreite geschlossen wird.
Das mit seinem inneren Ende auf dem Auflagearm 17 aufliegende Rohr 3 wird dann durch Einfahren des Werkzeugwagens 7 in die Schweißmaschine 2 weiter auf den Auflagearm 17 geschoben.
Innerhalb der Schweißmaschine befindet sich die Spannvorrichtung 4 zum Einspannen der Längsränder 13, 13a des Rohres sowie ein zwischen deren Spannbacken 18, 18a eingreifender schwertartiger Seitenanschlag 19 (Figur 7).

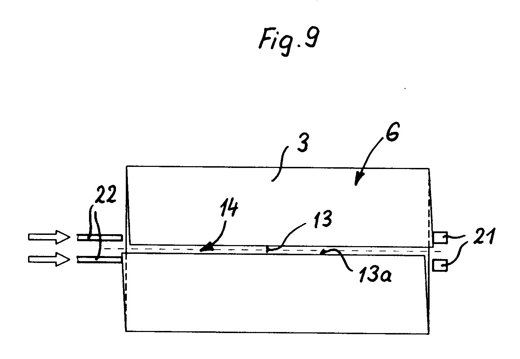

Beim Einschieben des Rohres 3 in die Spannvorrichtung 4 wird das Rohr mittels einer Zuführhilfe 20 (Figur 8) in Position gehalten. Diese Zuführhilfe fixiert die Rohr- Längsränder nach oben und in Seitenrichtung. Nach erfolgtem Einschub des Rohres 3 kann die Zuführhilfe 20 nach oben bewegt werden, um das spätere Ausfahren des geschweißten Rohres zu ermöglichen.
Beim Einfahren des Rohres 3 mit Hilfe des Werkzeugwagens 7 wird das Rohr 3 stirnseitig in der Nähe der Längsränder 13, 13a gegen feste Anschläge 21 geschoben und mit Hilfe von vorzugsweise pneumatisch angetriebenen Anschlägen 22 auf den in axialer Richtung gegenüberliegenden Seiten des Rohres 3 kann ein durch das Runden hervorgerufener, axialer Versatz ausgeglichen werden, wie dies in Figur 9 angedeutet ist.

Die innerhalb der Schweißmaschine 2 befindliche Halterung 5, die in den Figuren 10 bis 19 der Übersichtlichkeit halber ohne die Schweißmaschine dargestellt ist, wird dann mit ihren Seitenwangen 10 auf Spannposition zusammengefahren, wie dies in Figur 11 erkennbar ist. Die Seitenwangen 10 sind über ein Getriebe synchronisiert, so daß synchrone, gegensinnige Bewegungen vorhanden sind. Die jeweilige Spannposition, d.h. der Abstand der Seitenwangen 10 zueinander ist abhängig vom jeweiligen Rohrdurchmesser.

Damit sich beim Zusammenfahren der Seitenwangen 10 in Spannposition die vertikale Position des Rohres 3 nicht ändert, wird gleichzeitig mit der Bewegung der Seitenwangen 10 auch die Länge der Zugelemente 9 reguliert.

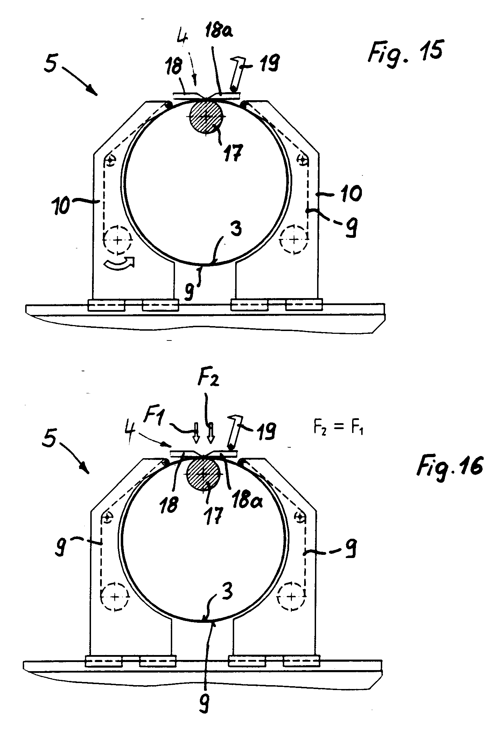

In der in Figur 11 und 12 gezeigten Lage wird die Zugkraft innerhalb der Zugelemente 9 durch weiteres Aufwickeln der Haspeln 12 erhöht, so daß das Rohr 3 mit seinen Längsrändern 13, 13a soweit zusammengeführt wird, bis diese Längsränder beidseitig des schwertartigen Seitenanschlages 19 anliegen. Die jeweils über die Zugelemente 9 aufgebrachte und auf das Rohr einwirkende Spannkraft ist abhängig von der Materialstärke und dem Durchmesser des Rohres.
Der auf der geraden Seite des Seitenanschlages 19 anliegende Längsrand 13a wird dann durch die ihm zugeordnete Spannbacke 18a festgespannt. Auf der gegenüberliegenden Seite wird die Spannbacke 18 nur soweit angespannt, daß der Längsrand 13 noch verschiebbar bleibt. In Figur 13 ist dies durch die Pfeile F₁ und F₂ angedeutet, wobei gilt, daß F₁ wesentlich kleiner als F₂ ist.
Der Seitenanschlag 19, an dem die beiden Längsränder 13, 13a anliegen, wird dann durch Hochschwenken (Figur 14) entfernt. Der nun vorhandene Spalt zwischen den Rohr-Längsrändern muß anschließend geschlossen werden. Dies erfolgt durch einseitiges Erhöhen der Zugkraft im Zugelement 9, wobei dies im Ausführungsbeispiel linksseitig erfolgt, damit der linke Längsrand 13, der von der Spannbacke 18 nur leicht gehalten wird, gegen den festeingspannten Längsrand 13a geschoben werden kann. Die Reibung zwischen dem Rohr 3 und dem Zugelement 9 ist in der Regel so groß, daß beim Nachschieben des leicht eingespannten Längsrandes 13 keine Gleitbewegung zwischen Rohr und den Spannelementen möglich ist. Nach diesem Zusammenschieben der Längsränder 13, 13a (Figur 15) wird die Spannkraft der Spannbacke 18 erhöht und damit auch der Längsrand 13 festgelegt. In dieser Phase ist dann keine Verschiebung der Längsränder 13, 13a mehr möglich und die Spannkraft F1 der Spannbacke 18 entspricht dann auch der Spannkraft F2 der Spannbacke 18 (Figur 16).

In dieser Lage kann dann der Schweißvorgang mit dem jeweils gewählten Schweißverfahren ausgeführt werden. Nach dem Schweißvorgang kann die Spannkraft im Zugelement 9 und auch der Spannbacken 18, 18a gelöst werden und die Seitenwangen 10 werden in die in Figur 10 erkennbare Lage auseinandergefahren. Das fertige Rohr liegt dann lose auf dem Zugelementen 9 auf. Der Werkzeugwagen 7 wird anschließend in Entnahmeposition ausgefahren und dabei das fertige Rohr 3 mitgenommen. Das Rohr kann dann nach hinten oder nach oben entnommen werden.

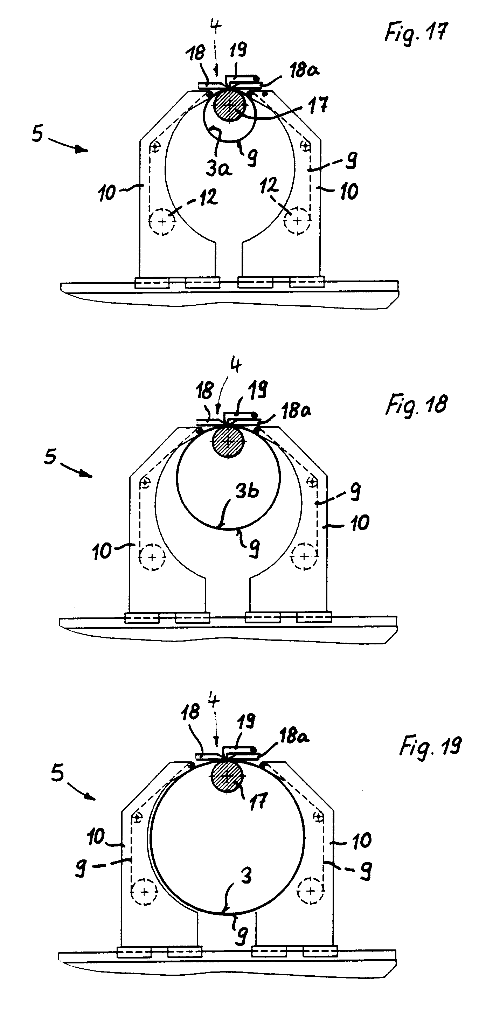

Die Figuren 17 bis 19 verdeutlichen nochmals den besonderen Vorteil der vorliegenden Erfindung, nämlich Rohre 3, 3a, 3b unterschiedlichen Durchmessers mit der gleichen Vorrichtung 1 herstellen zu können, ohne daß aufwendige Umrüstarbeiten oder ein Teilewechsel erforderlich wäre. Es besteht somit auch die Möglichkeit, kleinere Stückzahlen von Rohren gleichen Durchmessers wirtschaftlich herstellen zu können.
Bei Verwendung einer entsprechend programmierbaren Steuerung besteht bei besonders geringem Aufwand auch die Möglichkeit, Rohre mit unterschiedlichem Durchmesser nacheinander im Wechsel herzustellen. Für eine automatische Einstellung könnten dazu auch Sensoren zur Erfassung der Größe des Blech-Zuschnittes 6 für das jeweils herzustellende Rohr vorgesehen sein.
Zum Längsnahtschweißen der Rohre können unterschiedliche Schweißverfahren zum Einsatz kommen, beispielsweise Laser-Schweißungen, WIG-Schweißungen, Plasma-Schweißungen und dergleichen.
Die erfindungsgemäße Vorrichtung ermöglicht das Herstellen von Rohren mit sehr unterschiedlichem Durchmesser, wobei Durchmesserverhältnisse von 1 zu 10 verarbeitet werden können. Dies bedeutet, daß beispielsweise nacheinander Rohre mit einem Durchmesser von weniger als 100 mm und Rohre mit bis zu 10 mal größerem Durchmesser hergestellt werden können. Ein üblicher Einsatzbereich für die erfindungsgemäße Vorrichtung liegt bei Rohrdurchmessern zwischen 100 mm und 600 mm. Die Anspassung an diese unterschiedlichen Durchmesser erfolgt praktisch automatisch mit Hilfe der Haspel-Wickelantriebe und auch der Abstandsverstellung der Seitenwangen 10.
In Versuchen hat sich gezeigt, daß mit der erfindungsgemäßen Vorrichtung 1 eine sehr präzise Einspannung der Rohre bzw. von deren Längsrändern 13, 13a möglich ist, wobei Fügespalte von kleiner als 0,1 mm und Positionsgenauigkeiten in vertikaler Richtung von +/- 0,1 mm und in horizontaler Richtung von +/- 0,05 mm realisierbar sind.

## Patentansprüche

1. Vorrichtung zum Herstellen von Rohren aus dünnwandigem Material, insbesondere Blechen, mit einer Stumpfnahtschweißmaschine zum Längsnahtschweißen sowie einer Spannvorrichtung zum Halten eines gegebenenfalls rohrförmig vorgeformten Zuschnittes in Schweißstellung, wobei die Spannvorrichtung Spannbacken jeweils für die Längsränder des Zuschnittes aufweist und wobei eine Halterung zur Auflage eines rohrförmig vorgeformten Zuschnittes vorgesehen ist, **dadurch gekennzeichnet**, daß in ihrem Abstand zueinander verstellbare Halter (10) vorgesehen sind, zwischen denen zur Auflage für den Zuschnitt wenigstens ein den Zuschnitt untergreifendes und haltendes, flexibles Zugelement (9) aufgespannt ist, und daß die wirksame Länge des am Zuschnitt (3,6) angreifenden Zugelementes (9) verstellbar ist.

2. Vorrichtung nach Anspruch 1, dadurch gekennzeichnet, daß an den zueinander verstellbaren Haltern (10) Umlenkungen (11) für das Zugelement vorgesehen sind.

3. Vorrichtung nach Anspruch 1 oder 2, dadurch gekennzeichnet, daß vorzugsweise mehrere, in Längsrichtung des Rohres (3) nebeneinander angeordnete Zugelemente (9) vorgesehen sind, die insbesondere als Spannbänder ausgebildet sind.

4. Vorrichtung nach einem der Ansprüche 1 bis 3, dadurch gekennzeichnet, daß die Zugelemente (9) jeweils mit einem Ende auf einer mit einem Wickelantrieb verbunden Haspel (12) aufgewickelt sind und das jeweils andere Ende der Zugelemente fest am Halter angeschlossen ist.

5. Vorrichtung nach einem der Ansprüche 1 bis 3, dadurch gekennzeichnet, daß beide Enden der Zugelemente (9) jeweils auf mit Wickelantrieben verbundenen Haspeln (12) aufgewickelt sind.

6. Vorrichtung nach einem der Ansprüche 1 bis 5, dadurch gekennzeichnet, daß sie einen relativ zur Stumpfnahtschweißmaschine (2) in Längsrichtung des Rohres (3) verfahrbaren Werkzeugwagen (7) mit der Halterung (5) für den Zuschnitt (6) bzw. das Rohr (3) aufweist.

7. Vorrichtung nach einem der Ansprüche 1 bis 6, dadurch gekennzeichnet, daß der Werkzeugwagen (7) in ihrem Abstand zueinander verstellbare Seitenwangen (10) als Halter für die Zugelemente (9) aufweist, an denen die Haspeln gegebenenfalls mit Wickelantrieben vorgesehen sind und daß sich die Zugelement-Umlenkungen an den oberen Enden der Seitenwangen (10) befinden.

8. Vorrichtung nach einem der Ansprüche 1 bis 7, dadurch gekennzeichnet, daß der Werkzeugwagen (7) etwa um die Länge des herzustellenden Rohres (3) aus der Stumpfnahtschweißmaschine herausfahrbar ist und insbesondere auf mit der Stumpfnahtschweißmaschine verbundenen Längsschiebeführungen (8) gelagert ist.

9. Vorrichtung nach einem der Ansprüche 1 bis 8, dadurch gekennzeichnet, daß die Spannvorrichtung (4) eine Auflage (17) für die Längsränder (13,13a) des Rohres (3) sowie zur oberseitigen Beaufschlagung der Längsränder voneinander getrennt betätigbare Spannbacken (18,18a) aufweist.

10. Vorrichtung nach einem der Ansprüche 1 bis 9, dadurch gekennzeichnet, daß die Spannbacken (18) zum Halten des zu dem von den anderen Spannbacken (18a) festgehaltenen Längsrand (13a) zugeführten Längsrand (13) in ihrer Spannkraft einstellbar sind.

11. Vorrichtung nach einem der Ansprüche 1 bis 10, dadurch gekennzeichnet, daß zwischen den Spannbacken (18,18a) zum Halten der Rohr-Längsränder (13,13a) ein schwertartiger, aus dem Rohrnahtbereich nach dem Einspannen der Längsränder entfernbarer Seitenanschlag (19) vorgesehen ist.

12. Vorrichtung nach einem der Ansprüche 1 bis 11, dadurch gekennzeichnet, daß beim inneren Einschiebeende für den Zuschnitt stirnseitig in der Nähe dessen Längsränder angreifende Anschläge (21,22) vorgesehen sind.

13. Vorrichtung nach einem der Ansprüche 1 bis 12, dadurch gekennzeichnet, daß eine aus dem Bereich der Schweißmaschine vorstehende Auflage vorzugsweise in Form eines Auflagearmes (17) vorgesehen ist, der an seinem äußeren Ende eine Spaltzentrierung (15) trägt.

14. Vorrichtung nach einem der Ansprüche 1 bis 13, dadurch gekennzeichnet, daß sie zum Herstellen von im Durchmesser unterschiedlichen Rohren mit einem Verhältnis zwischen kleinstem und größten Rohrdurchmesser von etwa bis zu 1:10, insbesondere von 1:6 und vorzugsweise mit einem Durchmesser von etwa 100mm bis 600mm dimensioniert ist.

15. Vorrichtung nach einem der Ansprüche 1 bis 14, dadurch gekennzeichnet, daß das oder die Zugelemente (9) in Längsrichtung federnd elastisch ausgebildet sind und in ihrer Elastizität auf das Gewicht der zu tragenden Rohre abgestimmt ist.

16. Verfahren zur Herstellung von stumpfnaht-längsgeschweißten Rohren aus flächigem Material, insbesondere aus Blechzuschnitten, wobei die Zuschnitte einer Einspannvorrichtung zugeführt, dort gehalten und dann geschweißt werden, insbesondere mittels einer Vorrichtung nach einem der Ansprüche 1 bis 15, **dadurch gekennzeichnet**, daß der Zuschnitt (6) mit seinem Außenmantel auf eine seitlich von diesem gehaltene, flexible Auflage (9) aufgelegt wird, daß die Auflage dann abgesenkt und der Zuschnitt dabei rinnen- oder rohrförmig vorgebogen und von der Auflage (9) zunehmend umschlungen wird und dabei die Längsränder (13,13a) des Zuschnittes zusammengeführt werden.

17. Verfahren nach Anspruch 16, dadurch gekennzeichnet, daß nach dem Auflegen des gegebenenfalls vorgebogenen Zuschnittes (6) auf die flexible Auflage (9) die Längsränder (13,13a) des Zuschnittes stirnseitig gegen einen in den Rohr-Längsspalt (14) eingreifenden Anschlag (19) unter weiterem Zubiegen des Zuschnittes bewegt und dann eingespannt werden.

18. Verfahren nach Anspruch 16 oder 17, dadurch gekennzeichnet, daß nach dem Auflegen des Zuschnittes (6) auf die flexible Auflage (9), einer der Längsränder (13a) des Zuschnittes stirnseitig gegen einen in den Rohr-Längsspalt eingreifenden Anschlag (19) bewegt und dann eingespannt wird, daß anschließend der andere Längsrand (13) des Zuschnittes an die andere Seite des Anschlages (19) durch einseitiges Spannen der flexiblen Auflage (9) geschoben, der Anschlag entfernt und der bewegliche Längsrand (13) durch weiteres Spannen der flexiblen Auflage (9) an den eingespannten Längsrand (13a) angedrückt und dann in dieser Lage eingespannt wird und daß dann die Rohrlängsnaht geschweißt wird.

19. Verfahren nach einem der Ansprüche 16 bis 18, dadurch gekennzeichnet, daß sich die flexible Auflage in einer Bestückungslage zunächst außerhalb einer Schweißeinrichtung und dergleichen befindet und nach dem Auflegen eines flachen oder rohrförmigen Zuschnittes (6) und dem Absenken in Umschlingungslage in axialer Richtung in die Schweißeinrichtung (2) eingefahren wird und dort die Längsränder (13,13a) des Zuschnittes eingespannt werden.

## Claims

1. Apparatus for producing tubes from thin-walled material, particularly sheet metal, with a butt seam welding machine for longitudinal seam welding and a clamping device for holding an optionally tubular preshaped blank in the welding position, the clamping device having clamping jaws for the longitudinal edges of the blank and a holder being provided for supporting a tubular preshaped blank, characterised in that holders (10) are provided which are adjustable in their spacing from one another, between which at least one flexible tensioning element (9), engaging underneath and holding the blank, is braced as a support for the blank, and the effective length of the tensioning element (9) engaging on the blank (3, 6) is adjustable.

2. Apparatus according to claim 1, characterised in that guides (11) for the tensioning element are provided on the adjustable holders (10).

3. Apparatus according to claim 1 or 2, characterised in that preferably a plurality of tensioning elements (9) are provided, arranged side by side in the longitudinal direction of the tube (3), and constructed more particularly as clamping straps.

4. Apparatus according to one of claims 1 to 3, characterised in that the tensioning elements (9) are each wound at one end on a reel (12) connected to a winding drive and the other end of each tensioning element is firmly attached to the holder.

5. Apparatus according to one of claims 1 to 3, characterised in that both ends of the tensioning elements (9) are wound onto reels (12) connected to winding drives.

6. Apparatus according to one of claims 1 to 5, characterised in that it has a tool carriage (7), comprising the holder (5) for the blank (6) or tube (3), this carriage (7) being movable relative to the butt seam welding machine (2) in the longitudinal direction of the tube (3).

7. Apparatus according to one of claims 1 to 6, characterised in that the tool carriage (7) comprises side faces (10), adjustable in their spacing from one another, as holders for the tensioning elements (9), on which the reels are provided, optionally with winding drives, and the guides for the tensioning elements are located at the upper ends of the side faces (10).

8. Apparatus according to one of claims 1 to 7, characterised in that the tool carriage (7) can be moved out of the butt seam welding machine by approximately the length of the tube (3) which is to be produced, and is mounted, in particular, on longitudinal sliding guides (8) connected to the butt seam welding machine.

9. Apparatus according to one of claims 1 to 8, characterised in that the clamping device (4) has a support (17) for the longitudinal edges (13, 13a) of the tube (3) and for acting on the tops of the longitudinal edges of separately actuatable clamping jaws (18, 18a).

10. Apparatus according to one of claims 1 to 9, characterised in that the clamping jaws (18) are adjustable in their clamping force for holding the longitudinal edge (13) guided towards the longitudinal edge (13a) secured by the other clamping jaws (18a).

11. Apparatus according to one of claims 1 to 10, characterised in that a sword-like lateral stop (19) is provided between the clamping jaws (18, 18a) for holding the longitudinal edges (13, 13a) of the tube, and can be removed from the area of the tube seam after the clamping of the longitudinal edges.

12. Apparatus according to one of claims 1 to 11, characterised in that stops (21, 22) acting on the end face of the blank, near the longitudinal edges thereof, are provided at the inner insertion end for said blank.

13. Apparatus according to one of claims 1 to 12, characterised in that a support projecting out of the range of the welding machine is provided, preferably in the form of a support arm (17) which carries a centring slot (15) at its outer end.

14. Apparatus according to one of claims 1 to 13, characterised in that it is of such dimensions as to produce tubes of varying diameters with a ratio of minimum to maximum diameter of about 1 : 10, more particularly 1 : 6 and preferably with a diameter of about 100 mm to 600 mm.

15. Apparatus according to one of claims 1 to 14, characterised in that the or each tensioning element (9) is springily resilient in the longitudinal direction and is matched in its resilience to the weight of the tubes which are to be supported.

16. Process for producing longitudinally butt seam-welded tubes made from flat material, particularly sheet metal blanks, wherein the blanks are fed into a clamping device, held there and then welded, particularly using an apparatus according to one of claims 1 to 15, characterised in that the blank (6) is placed with its outer surface on a flexible support (9) held to the side thereof, the support is then lowered and the blank is pre-bent in a channel- or tube-shape and increasingly surrounded by the support (9) while the longitudinal edges (13, 13a) of the blank are brought together.

17. Process according to claim 16, characterised in that after the optionally pre-bent blank (6) has been laid on the flexible support (9), the longitudinal edges (13, 13a) of the blank are moved, at the end face, towards a stop (19) engaging in the longitudinal slot (14) in the tube, as the blank continues to be bent, and are then clamped.

18. Process according to claim 16 or 17, characterised in that after the blank (6) has been laid on the flexible support (9), one of the longitudinal edges (13a) of the blank is moved, at the end face, towards a stop (19) engaging in the longitudinal slot in the tube and is then clamped, then the other longitudinal edge (13) of the blank is pushed towards the other side of the stop (19) by clamping the flexible support (9) on one side, the stop is moved away and the movable longitudinal edge (13) is pressed against the clamped longitudinal edge (13a) by further clamping of the flexible support (9) and is then clamped in this position and the tube is then welded along a longitudinal weld seam.

19. Process according to one of claims 16 to 18, characterised in that the flexible support is initially in a loading position outside a welding apparatus or the like and after a flat or tubular blank (6) has been placed on it and it has been lowered into the enclosing position it is moved axially into the welding apparatus (2) and there the longitudinal edges (13, 13a) of the blank are clamped.

## Revendications

1. Dispositif de fabrication de tuyaux à partir de matériau mince, en particulier de tôles, comprenant une soudeuse bord à bord pour le soudage longitudinal, ainsi qu'un dispositif de serrage pour maintenir une découpe, éventuellement préformée sous forme tubulaire, en position de soudage, le dispositif de serrage comportant des mors respectifs pour les bords longitudinaux de la découpe et avec prévision d'une réception sur laquelle doit être posée une découpe préformée sous forme tubulaire, **caractérisé en ce** que des supports (10) à espacement mutuel réglable sont prévus, entre lesquels est tendu au moins un élément flexible de traction (9) sur lequel doit être posée la découpe, élément qui passe sous la découpe et la maintient, et que la longueur efficace de l'élément de traction (9) agissant sur la découpe (3, 6) est réglable.

2. Dispositif selon la revendication 1, caractérisé en ce que des renvois (11) pour l'élément de traction sont prévus sur les supports (10) réglables l'un par rapport à l'autre.

3. Dispositif selon la revendication 1 ou 2, caractérisé en ce que, de préférence, plusieurs éléments de traction (9) sont prévus, disposés l'un à côté de l'autre dans la direction longitudinale du tuyau (3) et réalisés en particulier comme des bandes de serrage.

4. Dispositif selon une des revendications 1 à 3, caractérisé en ce que les éléments de traction (9) sont enroulés chacun par une extrémité sur une bobine (12) reliée à une commande d'enroulement et l'autre extrémité des éléments de traction est raccordée fixe au support.

5. Dispositif selon une des revendications 1 à 3, caractérisé en ce que les deux extrémités des éléments de traction (9) sont enroulées sur des bobines (12) respectives reliées à des commandes d'enroulement.

6. Dispositif selon une des revendications 1 à 5, caractérisé en ce qu'il comporte un chariot d'outillage (7) qui est déplaçable dans la direction longitudinale du tuyau (3) par rapport à la soudeuse bord à bord (2) et dans lequel est disposée la réception (5) pour la découpe (6) ou le tuyau (3).

7. Dispositif selon une des revendications 1 à 6, caractérisé en ce que le chariot d'outillage (7) comporte, en tant que supports pour les éléments de traction (9), des joues latérales (10) dont l'espacement mutuel est réglable et sur lesquelles sont prévues les bobines, éventuellement avec les commandes d'enroulement, et que les renvois des éléments de traction se trouvent aux extrémités supérieures des joues latérales (10).

8. Dispositif selon une des revendications 1 à 7, caractérisé en ce que le chariot d'outillage (7) peut être sorti de la soudeuse bord à bord sur une distance correspondant à peu près à la longueur du tuyau (3) à fabriquer et est monté en particulier sur des glissières longitudinales (8) reliées à la soudeuse.

9. Dispositif selon une des revendications 1 à 8, caractérisé en ce que le dispositif de serrage (4) présente un appui (17) pour les bords longitudinaux (13, 13a) du tuyau (3), ainsi que des mors (18, 18a), pouvant être commandés séparément l'un de l'autre, ou les uns des autres et destinés à agir d'en haut sur les bords longitudinaux.

10. Dispositif selon une des revendications 1 à 9, caractérisé en ce que la force de serrage exercée par les mors (18) pour maintenir le bord longitudinal (13) approché de l'autre bord longitudinal (13a), lequel est tenu par les autres mors (18a), est réglable.

11. Dispositif selon une des revendications 1 à 10, caractérisé en ce qu'une butée latérale (19), semblable à une lame, est prévue entre les mors (18, 18a) pour maintenir les bords longitudinaux (13, 13a) du tuyau, butée qui peut être éloignée de la zone de joint du tuyau après le serrage des bords longitudinaux.

12. Dispositif selon une des revendications 1 à 11, caractérisé en ce que des butées (21, 22) sont prévues dans la zone de fin de course d'insertion intérieure de la découpe, butées qui sont destinées à agir en bout sur la découpe, à proximité de ses bords longitudinaux.

13. Dispositif selon une des revendications 1 à 12, caractérisé en ce qu'un appui faisant saillie de la zone de la soudeuse est prévu, de préférence sous la forme d'un bras d'appui (17) portant à son extrémité extérieure un centreur de fente (15).

14. Dispositif selon une des revendications 1 à 13, caractérisé en ce qu'il est dimensionné pour la fabrication de tuyaux de différents diamètres, dont le rapport entre le plus petit et le plus grand diamètre de tuyau est d'environ 1 : 10, en particulier de 1 : 6, les tuyaux ayant de préférence un diamètre d'environ 100 mm à 600 mm.

15. Dispositif selon une des revendications 1 à 14, caractérisé en ce que l'élément de traction ou les éléments de traction (9) est ou sont élastiques en direction longitudinale, leur élasticité étant accordée au poids des tuyaux à porter.

16. Procédé de fabrication de tuyaux à partir de matériau plat soudé longitudinalement bord à bord, en particulier à partir de tôles, selon lequel les découpes de tôle sont amenées à un dispositif de serrage, y sont maintenues puis soudées, en particulier au moyen d'un dispositif selon une des revendications 1 à 15, **caractérisé en ce** que la découpe (6) est posée par sa surface extérieure sur une surface flexible de pose (9) maintenue latéralement par rapport à elle, que la surface de pose est ensuite abaissée, pendant que la découpe est pré-cintrée en gouttière ou en tuyau et entourée de plus en plus par la surface de pose (9), alors que les bords longitudinaux (13, 13a) de la découpe sont mutuellement rapprochés.

17. Procédé selon la revendication 16, caractérisé en ce que, après la disposition de la découpe (6), éventuellement pré-cintrée, sur la surface flexible de pose (9), les bords longitudinaux (13, 13a) de la découpe sont amenés à venir s'appliquer en bout contre une butée (19) engagée dans la fente longitudinale (14) formée par le tuyau en cours de fabrication, pendant que la découpe est cintrée davantage, et sont ensuite serrés.

18. Procédé selon la revendication 16 ou 17, caractérisé en ce que, après la disposition de la découpe (6) sur la surface flexible de pose (9), l'un des bords longitudinaux (13a) de la découpe est amené à venir s'appliquer en bout contre une butée (19) engagée dans la fente longitudinale formée par le tuyau en cours de fabrication, et est ensuite serré, que l'autre bord longitudinal (13) de la découpe est poussé après cela jusque contre l'autre côté de la butée (19) par la tension unilatérale de la surface flexible de pose (9), la butée étant ensuite enlevée et le bord longitudinal mobile (13) étant pressé, par la poursuite de la tension de la surface flexible de pose (9), jusque contre le bord longitudinal serré (13a) puis serré lui-même dans cette position, le joint longitudinal du tuyau étant soudé après cela.

19. Procédé selon une des revendications 16 à 18, caractérisé en ce que la surface flexible de pose se trouve d'abord, dans une position de chargement, à l'extérieur d'une soudeuse et analogue et, après la disposition sur elle d'une découpe (6) plate ou de forme tubulaire et son abaissement dans une position où elle entoure la découpe, est insérée en direction axiale dans la soudeuse (2), où les bords longitudinaux (13, 13a) de la découpe sont serrés.
